# EUROPEAN PATENT APPLICATION

(11) **EP 3 923 454 A1**
(43) Date of publication of application: **15.12.2021**
(21) Application number: 19914529.3
(22) Date of filing: 21.11.2019
(51) Int. Cl.: H02K 3/34, H02K 3/46, H02K 1/18

(54) **ELECTRIC TOOL AND MOTOR**

(30) Priority: 07.02.2019 JP 2019021091
(71) Applicant: Panasonic Intellectual Property Management Co., Ltd., Osaka-shi, Osaka 540-6207 (JP)
(72) Inventor: ESAKA, Koichiro, Osaka-shi, Osaka 540-6207 (JP); NAKAMURA, Akito, Osaka-shi, Osaka 540-6207 (JP); OKADA, Kenji, Osaka-shi, Osaka 540-6207 (JP); MIZUNO, Mitsumasa, Osaka-shi, Osaka 540-6207 (JP)
(74) Representative: Appelt, Christian W.
(86) International application number: PCT/JP2019/045650
(87) International publication number: WO 2020/161989

(57) **Abstract**

An object of the present disclosure is to provide an electric tool and motor with the ability to reduce the chances of a coil wound around a tooth coming off the tooth. An electric tool includes a motor (1). The motor (1) includes a stator core (20) and a rotor (5). The rotor (5) has an output shaft (51) and rotates with respect to the stator core (20). The stator core (20) includes: an inner cylindrical portion (3) having a circular cylindrical shape; and a plurality of teeth (4). Inside the inner cylindrical portion (3), the rotor (5) is arranged. Each of the plurality of teeth (4) includes a body portion (41) and a tip piece (42). The body portion (41) protrudes outward from the inner cylindrical portion (3) along a radius of the inner cylindrical portion (3). The tip piece (42) extends, from a tip part of the body portion (41), in a direction intersecting with a direction in which the body portion (41) protrudes.

## Description

### Technical Field

The present disclosure generally relates to an electric tool and a motor, and more particularly relates to a motor including a stator core and a rotor, and an electric tool including the motor.

### Background Art

Patent Literature 1 discloses an electric tool including a brushless motor. The brushless motor includes a stator core, a rotor, and a plurality of coils. The stator core is divided into a plurality of teeth, around each of which a coil is wound. In one implementation, a connecting portion is provided between two protruding ends of two adjacent teeth to connect the two protruding ends, thereby fixing, and integrating, all of those teeth at their protruding ends.

### Citation List

### Patent Literature

Patent Literature 1: JP 2019-004601 A

### Summary of Invention

It is therefore an object of the present disclosure to provide an electric tool and a motor with the ability to reduce the chances of a coil wound around a tooth coming off the tooth.

An electric tool according to an aspect of the present disclosure includes a motor. The motor includes a stator core and a rotor. The rotor has an output shaft and rotates with respect to the stator core. The stator core includes: an inner cylindrical portion having a circular cylindrical shape; and a plurality of teeth. Inside the inner cylindrical portion, the rotor is arranged. Each of the plurality of teeth includes a body portion and a tip piece. The body portion protrudes outward from the inner cylindrical portion along a radius of the inner cylindrical portion. The tip piece extends, from a tip part of the body portion, in a direction intersecting with a direction in which the body portion protrudes.

A motor according to another aspect of the present disclosure includes a stator core and a rotor. The rotor has an output shaft and rotates with respect to the stator core. The stator core includes: an inner cylindrical portion having a circular cylindrical shape; and a plurality of teeth. Inside the inner cylindrical portion, the rotor is arranged. Each of the plurality of teeth includes a body portion and a tip piece. The body portion protrudes outward from the inner cylindrical portion along a radius of the inner cylindrical portion. The tip piece extends, from a tip part of the body portion, in a direction intersecting with a direction in which the body portion protrudes.

### Brief Description of Drawings

FIG. 1 is an exploded view illustrating a principal part of a motor according to an exemplary embodiment;
FIG. 2 is a schematic representation of an electric tool including the motor;
FIG. 3 is a plan view of a rotor included in the motor;
FIG. 4 is a plan view of a rotor as a comparative example for a rotor included in the motor;
FIG. 5 is a cross-sectional view of the motor;
FIG. 6 is an exploded view of a central core and coil bobbin of the motor;
FIG. 7 is a plan view illustrating a principal part of the central core of the motor;
FIG. 8 is a plan view illustrating a principal part of a stator of the motor;
FIG. 9 is a plan view illustrating an alternative exemplary configuration for the central core of the motor;
FIG. 10 is a plan view illustrating another alternative exemplary configuration for the central core of the motor;
FIG. 11 is a plan view illustrating still another alternative exemplary configuration for the central core of the motor;
FIG. 12 is a cross-sectional view illustrating yet another alternative exemplary configuration for the central core of the motor;
FIG. 13 is a cross-sectional view illustrating yet another alternative exemplary configuration for the central core of the motor;
FIG. 14 is a cross-sectional view of a rotor core of the motor; and
FIG. 15 is a cross-sectional view illustrating an alternative exemplary configuration for the rotor core of the motor.

### Description of Embodiments

An electric tool according to an embodiment and a motor provided for the electric tool will be described with reference to the accompanying drawings. Note that the embodiment to be described below is only an exemplary one of various embodiments of the present disclosure and should not be construed as limiting. Rather, the exemplary embodiment may be readily modified in various manners depending on a design choice or any other factor without departing from the scope of the present disclosure. Also, the drawings to be referred to in the following description of embodiments are all schematic representations. Thus, the ratio of the dimensions (including thicknesses) of respective constituent elements illustrated on the drawings does not always reflect their actual dimensional ratio.

### (1) Electric tool

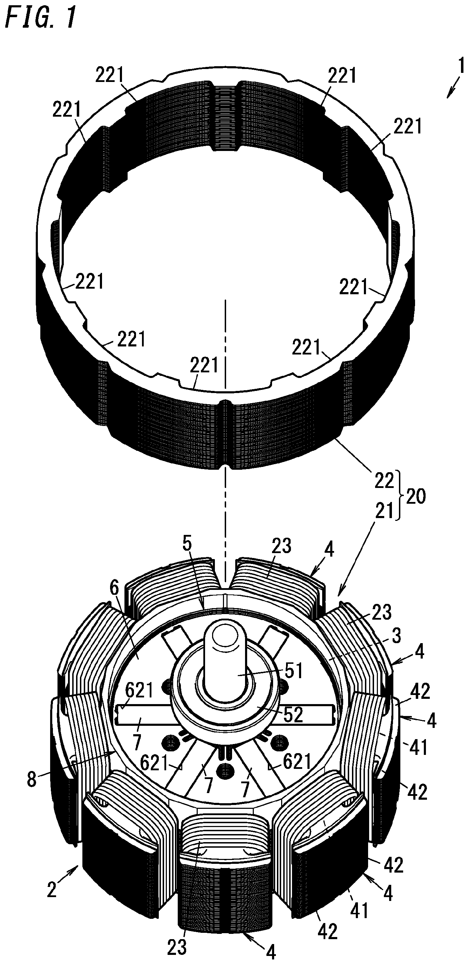

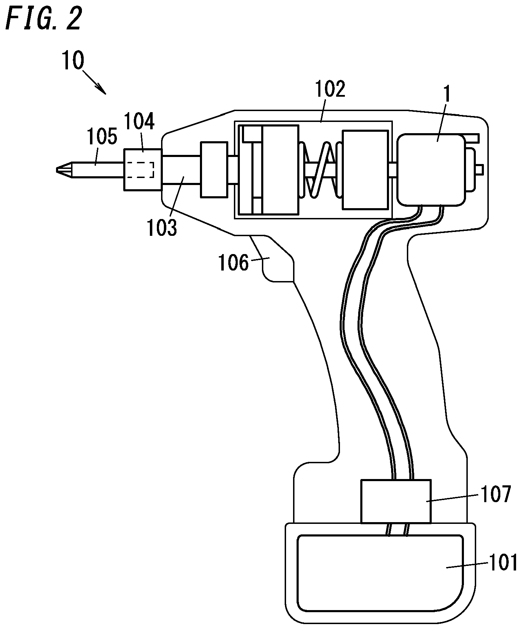

As shown in FIGS. 1 and 2, the electric tool 10 includes a motor 1. As shown in FIG. 2, the electric tool 10 further includes a power supply 101, a driving force transmission unit 102, an output unit 103, a chuck 104, a tip tool 105, a trigger volume 106, and a control circuit 107. The electric tool 10 is a tool for driving the tip tool 105 with the driving force of the motor 1.

The motor 1 is a driving source for driving the tip tool 105. The motor 1 may be implemented as, for example, a brushless motor. The power supply 101 is a DC power supply for supplying a current to drive the motor 1. The power supply 101 includes a single or a plurality of secondary batteries. The driving force transmission unit 102 regulates the output (driving force) of the motor 1 and supplies the regulated driving force to the output unit 103. The output unit 103 is a part to be driven (in rotation, for example) with the driving force supplied from the driving force transmission unit 102. The chuck 104 is a part fixed to the output unit 103 which allows the tip tool 105 to be attached thereto removably. Examples of the tip tool 105 (also called a "bit") include screwdrivers, sockets, and drills. One of those various types of tip tools 105 is selected depending on the intended use and attached for use to the chuck 104.

The trigger volume 106 is an operating unit for accepting a command for controlling the rotation of the motor 1. The motor 1 may be turned ON and OFF by performing the operation of pulling the trigger volume 106. In addition, adjusting the manipulative variable of the operation of pulling the trigger volume 106 allows the rotational velocity of the output unit 103, i.e., the rotational velocity of the motor 1, to be controlled. The control circuit 107 either starts or stop rotating the motor 1 in accordance with the command entered through the trigger volume 106 and also controls the rotational velocity of the motor 1. In this electric tool 10, the tip tool 105 is attached to the chuck 104. Then, the rotational velocity of the motor 1 is controlled by operating the trigger volume 106, thereby controlling the rotational velocity of the tip tool 105.

Note that the electric tool 10 according to this embodiment includes the chuck 104, thus making the tip tool 105 replaceable depending on the intended use. However, the tip tool 105 does not have to be replaceable. Alternatively, the electric tool 10 may also be designed to allow the user to use only a particular type of tip tool 105.

### (2) Motor

### (2-1) Overview

Next, a configuration for the motor 1 will be described with reference to FIG. 1 and other drawings. The motor 1 includes a stator 2 and a rotor 5. The rotor 5 has an output shaft 51. The stator 2 includes a stator core 20 and a plurality of (e.g., nine in the example illustrated in FIG. 1) coils 23. The rotor 5 rotates with respect to the stator 2. Specifically, the magnetic flux generated from the plurality of coils 23 wound around the stator core 20 produces electromagnetic force that causes the rotor 5 to rotate. The motor 1 transmits the rotational power (driving force) of the rotor 5 from the output shaft 51 to the driving force transmission unit 102 (see FIG. 2).

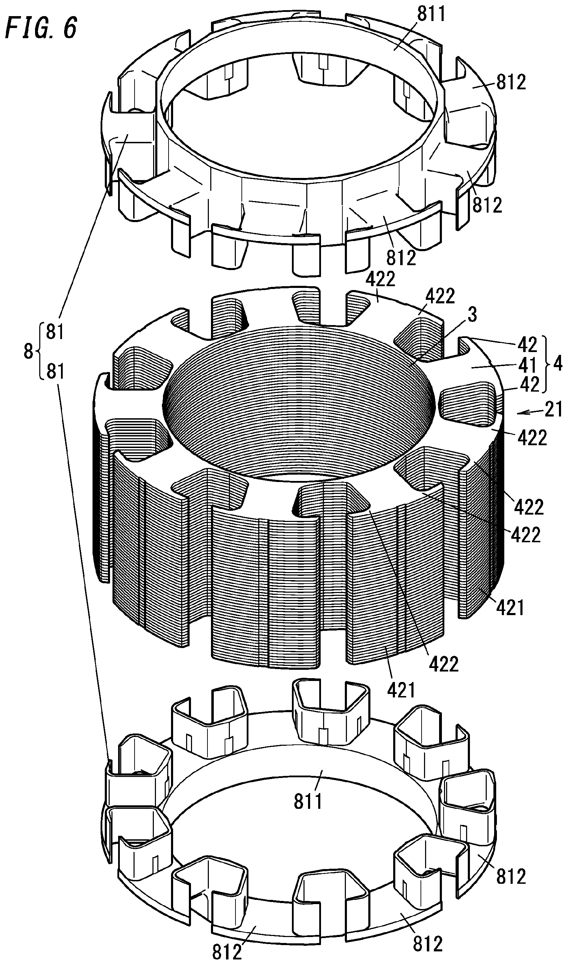

The stator core 20 includes a central core 21 and an outer cylindrical portion 22. The outer cylindrical portion 22 is mounted onto the central core 21. The central core 21 includes an inner cylindrical portion 3 having a circular cylindrical shape and a plurality of (e.g., nine in the example illustrated in FIG. 1) teeth 4. Inside the inner cylindrical portion 3, the rotor 5 is arranged. Each of the plurality of teeth 4 includes a body portion 41 and two tip pieces 42. The body portion 41 protrudes outward from the inner cylindrical portion 3 along the radius of the inner cylindrical portion 3. The two tip pieces 42 extend, from a tip part of the body portion 41, in a direction intersecting with a direction in which the body portion 41 protrudes. Around the body portion 41, the coil 23 is wound via a coil bobbin 8 (see FIG. 6) to be described later.

The two tip pieces 42 are provided as a stopper for reducing the chances of the coil 23 coming off the body portion 41. Specifically, having the coil 23 caught in the two tip pieces 42 while the coil 23 is moving toward a tip part of the body portion 41 reduces the chances of the coil 23 coming off.

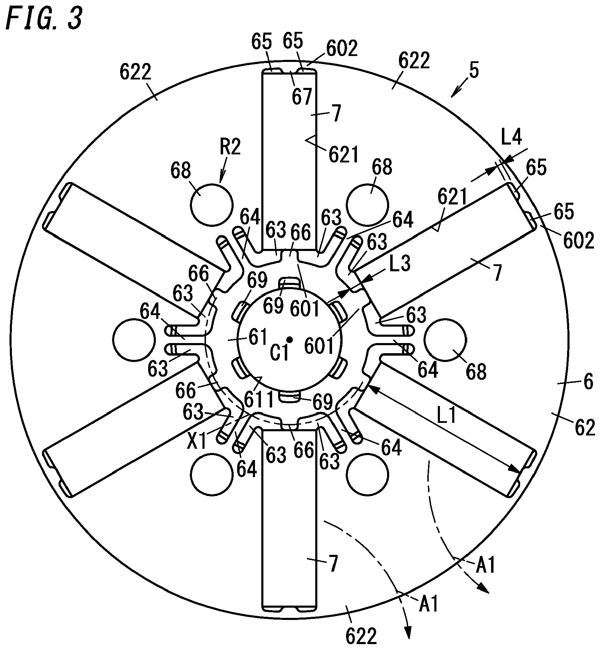

The rotor 5 includes a rotor core 6 having a circular cylindrical shape, a plurality of (e.g., six in the example illustrated in FIG. 1) permanent magnets 7, and an output shaft 51. The output shaft 51 is held inside the rotor core 6. The plurality of permanent magnets 7 are arranged as spokes (i.e., radially) around the center C1 of the rotor core 6 (see FIG. 3).

In this case, when viewed along the axis of the rotor core 6, the rotor core 6 has the shape of a circle. The center C1 of the rotor core 6 corresponds to the center of the circle. Each of the permanent magnets 7 has a rectangular parallelepiped shape. When viewed along the axis of the rotor core 6, each permanent magnet 7 has a rectangular shape. If the plurality of permanent magnets 7 are arranged as spokes around the center C1 of the rotor core 6, this means that when viewed along the axis of the rotor core 6, the permanent magnets 7 are arranged along the circumference of the rotor core 6 such that the longitudinal axis of each of the permanent magnets 7 is aligned with the radius of the rotor core 6.

Arranging the plurality of permanent magnets 7 as spokes around the center C1 of the rotor core 6 facilitates shortening the diameter of the rotor 5. Particularly when the number of the permanent magnets 7 provided is relatively large, this facilitates shortening the diameter of the rotor 5 while keeping the length L1 measured along the longitudinal axis of each permanent magnet 7 (see FIG. 3) long enough.

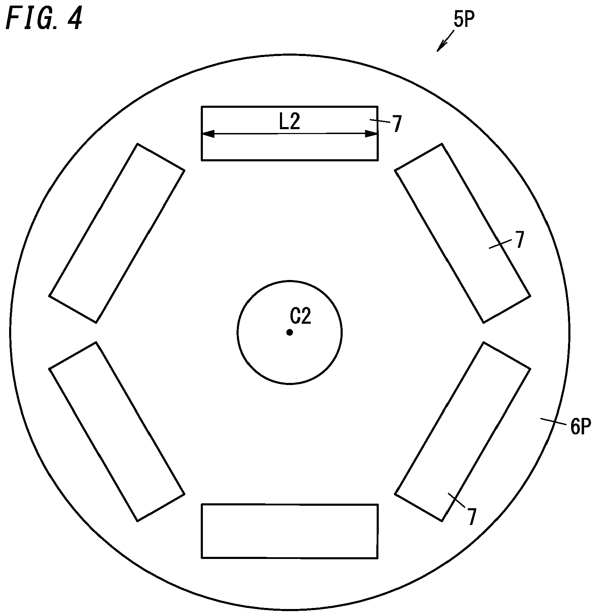

For example, in a rotor 5P according to a comparative example shown in FIG. 4, a plurality of (e.g., six in the example illustrated in FIG. 4) permanent magnets 7 are arranged around the center C2 of the rotor core 6 to form a polygonal (i.e., a hexagonal) pattern. This requires, if the diameter of the rotor core 6 is constant, the length L2 measured along the longitudinal axis of each permanent magnet 7 to be shortened accordingly as the number of permanent magnets 7 provided increases. Meanwhile, this also requires, if the length L2 measured along the longitudinal axis of the permanent magnets 7 is constant, the diameter of the rotor core 6 to be extended accordingly as the number of the permanent magnets 7 provided increases. In that case, the longer the diameter of the rotor core 6 is, the greater the moment of force required to allow the rotor core 6 to start or stop its rotation becomes. Furthermore, as the diameter of the rotor core 6 is extended to increase the distance between the plurality of permanent magnets 7 and the center C2, the centrifugal force applied to the plurality of permanent magnets 7 increases accordingly, thus increasing the chances of the rotor core 6 being deformed by the force applied from the plurality of permanent magnets 7. That is why in some cases, the diameter of the rotor core 6 should not be extended.

Meanwhile, even if the number of the permanent magnets 7 provided is relatively large, the rotor 5 according to this embodiment reduces the chances of the diameter of the rotor core 6 being extended, compared to the rotor core 6 according to the comparative example. Specifically, narrowing the interval between the plurality of permanent magnets 7 along the circumference of the rotor core 6 as the number of the permanent magnets 7 provided increases still allows the plurality of permanent magnets 7 to be arranged as spokes around the center C1 of the rotor core 6. Consequently, this allows the plurality of permanent magnets 7 to be arranged with the increase in the diameter of the rotor core 6 reduced.

That is to say, the rotor 5 according to this embodiment may reduce an increase in the diameter of the rotor core 6 when the torque of the motor 1 is increased by setting the number of the permanent magnets 7 provided at a relatively large number (e.g., six or more).

### (2-2) Central core

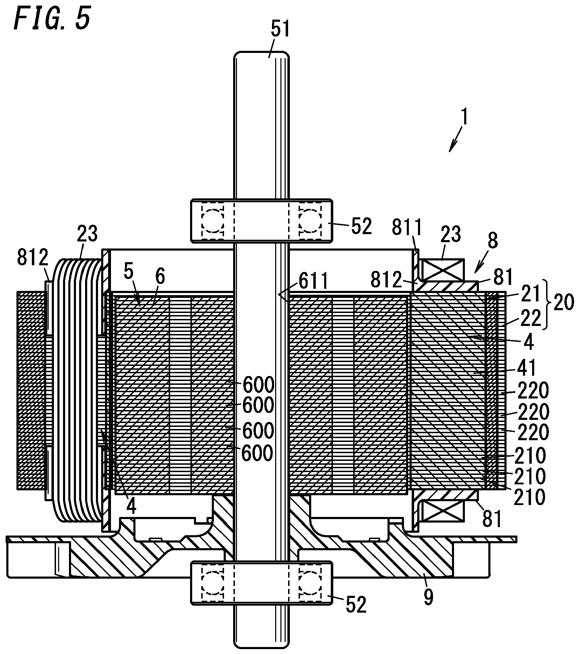

Next, the configuration of the stator 2 will be described in further detail. As shown in FIG. 5, the central core 21 of the stator core 20 of the stator 2 includes a plurality of steel plates 210. The central core 21 is formed by stacking the plurality of steel plates 210 one on top of another in the thickness direction. Each of the steel plates 210 is made of a magnetic material. Each of the steel plates 210 may be configured as, for example, a silicon steel plate.

As shown in FIG. 6, the inner cylindrical portion 3 has a circular cylindrical shape. The axis of the inner cylindrical portion 3 agrees with the thickness of the plurality of steel plates 210. The inner cylindrical portion 3 is continuous along its circumference. In other words, the inner cylindrical portion 3 is connected along its circumference without a break.

As shown in FIG. 6, the body portion 41 of each of the plurality of teeth 4 has a rectangular parallelepiped shape. The body portion 41 protrudes outward along the radius of the inner cylindrical portion 3. The respective body portions 41 of the plurality of teeth 4 are arranged at regular intervals along the circumference of the inner cylindrical portion 3.

The two tip pieces 42 extend from a tip part of the body portion 41 in a direction intersecting with the direction in which the body portion 41 protrudes. More specifically, the two tip pieces 42 are provided on both sides along the circumference of the inner cylindrical portion 3 at the tip part of the body portion 41. In addition, the two tip pieces 42 extend along the circumference of the inner cylindrical portion 3.

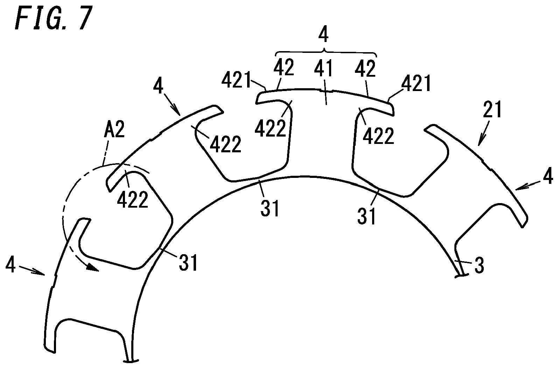

As shown in FIGS. 6 and 7, the surface, located closer to the outer edge along the radius of the inner cylindrical portion 3, of each tip piece 42 includes a curvilinear surface 421. When viewed along the axis of the inner cylindrical portion 3, the curvilinear surface 421 has the shape of an arc along a circle which is concentric with the inner cylindrical portion 3.

Each tip piece 42 has a curved portion 422 as a part connected to the body portion 41. The curved portion 422 is curved such that as the distance to the outer edge of the tip piece 42 decreases along the radius of the inner cylindrical portion 3, the distance from the body portion 41 increases along the circumference of the inner cylindrical portion 3. That is to say, the curved portion 422, which is a part, located at the proximal end (i.e., closer to the body portion 41), of each tip piece 42, is chamfered to have a rounded shape.

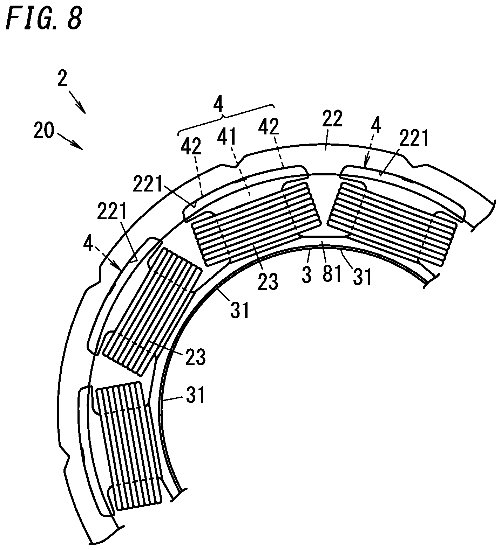

As shown in FIGS. 7 and 8, the inner cylindrical portion 3 includes a plurality of (e.g., nine in this embodiment) coupling portions 31, each of which is a portion that couples two teeth 4 together. Each of the coupling portions 31 is formed in the shape of an arc when viewed along the axis of the inner cylindrical portion 3.

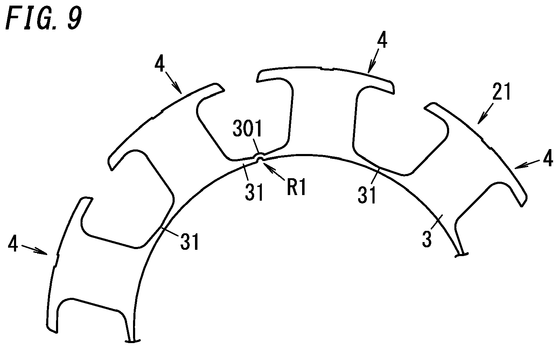

Alternatively, the inner cylindrical portion 3 may include a high magnetic resistance portion R1 as shown in FIG. 9. The high magnetic resistance portion R1 has higher magnetic resistance than parts, surrounding the high magnetic resistance portion R1, of the inner cylindrical portion 3. In the example illustrated in FIG. 9, the high magnetic resistance portion R1 is provided for a single coupling portion 31. Providing the high magnetic resistance portion R1 may reduce the magnetic flux generated by the coil 23 which leaks to the coupling portion 31. This allows the motor 1 to have increased torque compared to a situation where the inner cylindrical portion 3 includes no high magnetic resistance portions R1. Optionally, the high magnetic resistance portions R1 may be provided at multiple points. For example, the high magnetic resistance portions R1 may be provided for all coupling portions 31. Alternatively, the high magnetic resistance portions R1 may also be provided at regular intervals along the circumference of the inner cylindrical portion 3.

In the example illustrated in FIG. 9, the high magnetic resistance portion R1 includes a bypass portion 301. When viewed along the axis of the inner cylindrical portion 3, the inner cylindrical portion 3 basically has the shape of a ring. The inner cylindrical portion 3 has a curved shape in which the bypass portion 301 of the inner cylindrical portion 3 protrudes radially with respect to the ring. In addition, the inner cylindrical portion 3 is continuous along its circumference.

Providing the inner cylindrical portion 3 with the bypass portion 301 extends the magnetic path and increases the magnetic resistance in the bypass portion 301, compared to a situation where no bypass portion 301 is provided.

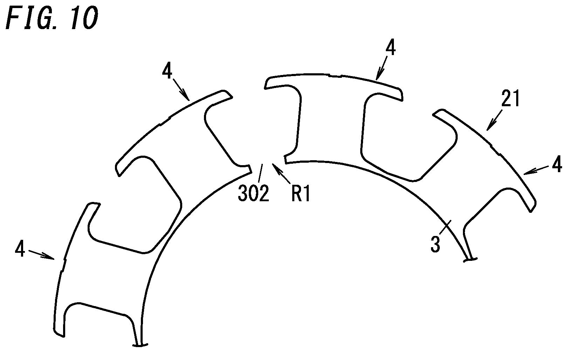

In another example, the high magnetic resistance portion R1 includes a penetrating portion 302 as shown in FIG. 10. In this example, the high magnetic resistance portion R1 has only one penetrating portion 302. The penetrating portion 302 penetrates through the inner cylindrical portion 3 along its axis. This allows the inner cylindrical portion 3 to divide the inner cylindrical portion 3 into multiple parts along its circumference. For example, when a single penetrating portion 302 is provided as shown in FIG. 10, the inner cylindrical portion 3 is divided into two at the penetrating portion 302 as a boundary. That is to say, in FIG. 10, the inner cylindrical portion 3 is discontinuous along the circumference. The penetrating portion 302 may be formed by stacking a plurality of steel plates 210 (see FIG. 5) one on top of another and then partially cutting off the inner cylindrical portion 3. Alternatively, a hole corresponding to the penetrating portion 302 may be provided through each of the plurality of steel plates 210 before the plurality of steel plates 210 are stacked one on top of another.

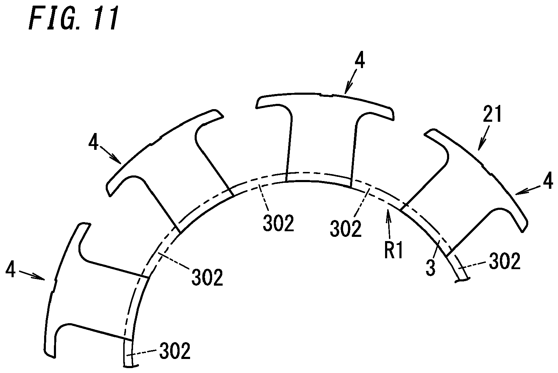

In still another example, the high magnetic resistance portion R1 has nine (only five of which are shown in FIG. 11) penetrating portions 302 as shown in FIG. 11. That is to say, the high magnetic resistance portion R1 has as many penetrating portions 302 as the teeth 4. Each of the nine penetrating portions 302 separates the plurality of teeth 4 from each other. In other words, the plurality of teeth 4 are not connected via the inner cylindrical portion 3 but are separate from each other. That is to say, in FIG. 10, the inner cylindrical portion 3 is discontinuous along its circumference. According to this implementation, the plurality of teeth 4 are held by the coil bobbin 8 to have their interval maintained. Note that in FIG. 11, the two-dot chains that indicate the inner cylindrical portion 3, including portions corresponding to the plurality of penetrating portions 302, are insubstantial ones.

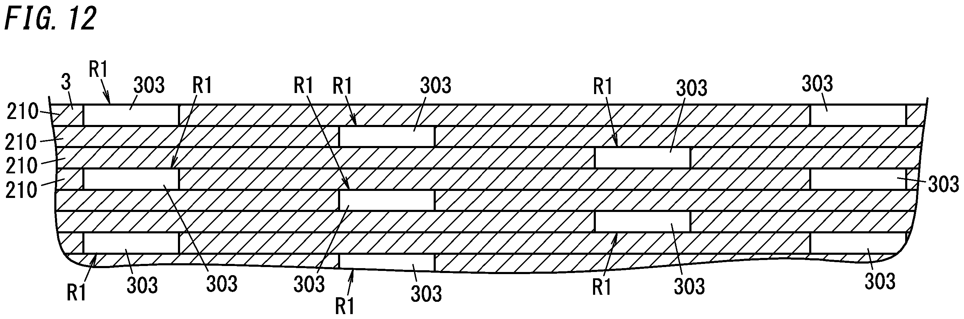

Yet another example will be described with reference to FIG. 12. FIG. 12 illustrates a part, extended as a plan view, of a cross section of the inner cylindrical portion 3. The high magnetic resistance portion R1 is provided for each of two or more steel plates 210, out of the plurality of steel plates 210. In FIG. 12, the high magnetic resistance portion R1 is provided for every steel plate 210. In other words, the inner cylindrical portion 3 includes a plurality of high magnetic resistance portions R1.

Each high magnetic resistance portion R1 has a plurality of cavities 303. Each of the plurality of cavities 303 penetrates through its associated steel plate 210 along the axis. Each cavity 303 may be formed by, for example, cutting out the steel plate 210. The plurality of cavities 303 are provided for respective parts, corresponding to the coupling portions 31 of the inner cylindrical portion 3 (see FIGS. 7 and 8), of the steel plate 210. The plurality of cavities 303 are provided at regular intervals along the circumference of the steel plate 210.

The plurality of steel plates 210 are stacked one on top of another such that the respective high magnetic resistance portions R1 (cavities 303) of two or more adjacent steel plates 210 do not overlap with each other along the thickness of the steel plates 210. In this case, the nine coupling portions 31 will be hereinafter referred to as a "first coupling portion," a "second coupling portion," ..., and a "ninth coupling portion," respectively, in the order in which the coupling portions 31 are arranged side by side along the circumference of the inner cylindrical portion 3. In addition, the plurality of steel plates 210 will be hereinafter referred to as a "first steel plate," a "second steel plate," ..., and so on, respectively, in the order in which the steel plates 210 are arranged one on top of another along the thickness of the steel plates 210. For example, in the first steel plate, the cavities 303 are provided through its parts corresponding to the first, fourth, and seventh coupling portions, respectively. In the second steel plate, the cavities 303 are provided through its parts corresponding to the second, fifth, and eighth coupling portions, respectively. In the third steel plate, the cavities 303 are provided through its parts corresponding to the third, sixth, and ninth coupling portions, respectively. In the inner cylindrical portion 3, between one cavity 303 and another cavity 303, provided at such a position where the latter cavity 303 overlaps with the former cavity 303 along the thickness of the steel plates 210, arranged are respective non-cavity 303 portions of one or more (e.g., two in the example shown in FIG. 12) steel plates 210.

The cavities 303 may be provided through each steel plate 210, for example, before the plurality of steel plates 210 are stacked one on top of another. The plurality of steel plate 210 are formed to have the same shape when viewed in the thickness direction and are stacked one on top of another such that two adjacent ones of the steel plates 210 have mutually different orientations (angles). More specifically, the second steel plate is stacked on the first steel plate to have an orientation that forms an angle of rotation of 40 degrees with respect to the first steel plate. The third steel plate is stacked on the second steel plate to have an orientation that forms an angle of rotation of 40 degrees with respect to the second steel plate. Likewise, each of the fourth steel plate and the other steel plates is stacked to have an orientation that forms an angle of rotation of 40 degrees (which is a predetermined angle) with respect to its adjacent steel plate. Optionally, some of the plurality of steel plates 210 may have a different thickness from others of the plurality of steel plates 210.

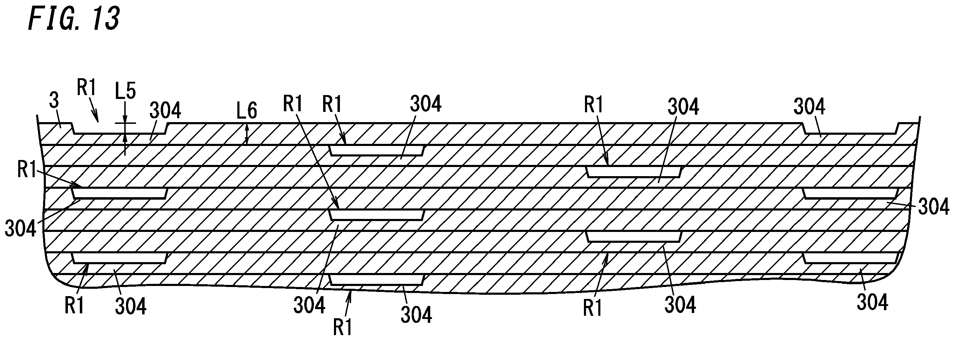

Still another example will be described with reference to FIG. 13. FIG. 13 illustrates a part, extended as a plan view, of a cross section of the inner cylindrical portion 3. As shown in FIG. 13, the high magnetic resistance portions R1 of each of the steel plates 210 may have thinned portions 304 instead of the cavities 303. Each of the thinned portions 304 has a shorter dimension as measured along the axis of the inner cylindrical portion 3 than parts, surrounding the thinned portion 304, of the inner cylindrical portion 3. That is to say, the thickness L5 of each thinned portion 304 of a steel plate 210 is smaller than the thickness L6 of parts, surrounding the thinned portion 304, of the steel plate 210. The thinned portion 304 is formed by subjecting a part of each steel plate 210 to pressing. This allows the steel plate 210 to have higher strength, compared to a situation where the thinned portion 304 is formed by removing a part of the steel plate 210.

Although some examples of the high magnetic resistance portion R1 have been described one by one, two or more of these examples may be adopted in combination as appropriate.

### (2-3) Coils and coil bobbin

As shown in FIG. 1, nine coils 23 are provided one to one for the nine teeth 4. The nine coils 23 are electrically connected together. The winding serving as each coil 23 may be an enamel wire, for example. This winding includes a linear conductor and an insulating coating that covers the conductor.

The motor 1 further includes a coil bobbin 8. The coil bobbin 8 may be made of a synthetic resin, for example. The coil bobbin 8 has electrical insulation properties. The coil bobbin 8 at least partially covers at least one (e.g., all, in this embodiment) of the plurality of teeth 4.

As shown in FIG. 6, the coil bobbin 8 includes two members 81. The two members 81 have the same shape. The two members 81 are arranged along the axis of the inner cylindrical portion 3. The two members 81 are provided separately from each other. Each member 81 is formed in such a shape that allows the plurality of teeth 4 to be fitted thereto along the axis of the inner cylindrical portion 3. Specifically, one of the two members 81 is attached to the central core 21 to cover the plurality of teeth 4 from a first end along the axis of the inner cylindrical portion 3. The other member 81 covers the plurality of teeth 4 from a second end along the axis of the inner cylindrical portion 3. Each member 81 includes: a cylindrical body 811 to overlap with the inner cylindrical portion 3; and a plurality of (e.g., nine in the example illustrated in FIG. 6) tooth covering portions 812 to cover the plurality of teeth 4. The cylindrical body 811 is formed in the shape of a circular cylinder, which is concentric with the inner cylindrical portion 3. Each tooth covering portion 812 protrudes outward along the radius of the cylindrical body 811 from the cylindrical body 811. A tip, located opposite from the tip closer to the inner cylindrical portion 3, of each tooth 4 is not covered with the coil bobbin 8 but is in contact with the outer cylindrical portion 22.

As shown in FIGS. 5 and 8, in a state where the two members 81 are attached to the central core 21 to cover the plurality of teeth at least partially, each coil 23 is wound around an associated body portion 41 via the two members 81 (of the coil bobbin 8). In this case, the coil 23 is wound around the body portion 41 so as to pass through a slot (cavity) between the body portion 41 and each of two body portions 41 adjacent to the former body portion 41.

The two members 81 are out of contact with each other along the axis of the inner cylindrical portion 3. Thus, in a region around the middle of the thickness of the central core 21, each tooth 4 is exposed in a direction perpendicular to the thickness of the central core 21. If the number of the steel plates 210 that form the central core 21 is changed to modify the design of the motor 1, for example, the thickness of the central core 21 changes. Then, as the thickness of the central core 21 changes, the gap distance between the two members 81 also changes.

### (2-4) Outer cylindrical portion

As shown in FIG. 5, the outer cylindrical portion 22 includes a plurality of steel plates 220. In other words, the outer cylindrical portion 22 is formed by stacking the plurality of steel plates 220 one on top of another in the thickness direction. Each steel plate 220 is made of a magnetic material. Each steel plate 220 may be a silicon steel plate, for example.

As shown in FIGS. 1 and 8, the outer cylindrical portion 22 has a circular cylindrical shape. The outer cylindrical portion 22 is mounted on, and surrounds, the plurality of teeth 4.

The outer cylindrical portion 22 includes a plurality of (e.g., nine) fitting portions 221. In other words, the outer cylindrical portion 22 includes as many fitting portions 221 as the teeth 4. Each of the plurality of fitting portions 221 is a recess provided on the inner peripheral surface of the outer cylindrical portion 22. The plurality of fitting portions 221 correspond one to one to the plurality of teeth 4. Each of the plurality of fitting portions 221 and one tooth 4, corresponding to the fitting portion 221, out of the plurality of teeth 4 are fitted into each other by causing at least one of the fitting portion 221 or the tooth 4 to move along the radius of the inner cylindrical portion 3. This allows the outer cylindrical portion 22 to be mounted onto the plurality of teeth 4.

To each fitting portion 221, a portion, including the two tip pieces 42, of an associated tooth 4 is fitted. Thus, the length, measured along the circumference of the outer cylindrical portion 22, of each fitting portion 221 is equal to the length as measured from the protruding tip of one of the two tip pieces 42 protruding from the body portion 41 through the protruding tip of the other tip piece 42. Note that as used herein, if some value is "equal to" another, these two values do not have to be exactly equal to each other but may also be different from each other within a tolerance range. The tolerance range may be defined by an error of within 3%, within 5%, or within 10%, for example.

With the coil bobbin 8 attached onto the central core 21 and the coils 23 wound around the coil bobbin 8, the outer cylindrical portion 22 may be mounted onto the plurality of teeth 4 by shrink-fitting, for example. Specifically, with the outer cylindrical portion 22 heated and expanded radially, the central core 21 is put inside the outer cylindrical portion 22. This makes the inner surface of the outer cylindrical portion 22 face the respective tips of the plurality of teeth 4 along the radius of the inner cylindrical portion 3 with a narrow gap left between the inner surface of the outer cylindrical portion 22 and the plurality of teeth 4. Thereafter, as the temperature of the outer cylindrical portion 22 falls to cause the outer cylindrical portion 22 to shrink, the inner surface of the outer cylindrical portion 22 comes into contact with the respective tips of the plurality of teeth 4. That is to say, when the plurality of fitting portions 221 move inward along the radius of the outer cylindrical portion 22 as the outer cylindrical portion 22 shrinks, the plurality of fitting portions 221 and the plurality of teeth 4 are fitted into each other. The outer cylindrical portion 22 applies, to the plurality of teeth 4, contact pressure produced inward along the radius of the outer cylindrical portion 22.

### (2-6) Rotor

Next, the configuration of the rotor 5 will be described in detail. As shown in FIG. 5, the rotor core 6 of the rotor 5 includes a plurality of steel plates 600. In other words, the rotor core 6 is formed by stacking a plurality of steel plates 600 one on top of another in the thickness direction. Each steel plate 600 is made of a magnetic material. Each steel plate 600 may be a silicon steel plate, for example.

The rotor core 6 is formed in the shape of a circular cylinder, which is concentric with the inner cylindrical portion 3 of the stator core 20. Along the axis of the rotor core 6, both ends of the rotor core 6 are aligned with both ends of the stator core 20. That is to say, a first end (e.g., the upper end on the paper on which FIG. 5 is drawn) along the axis of the rotor core 6 and a first end (e.g., the upper end on the paper on which FIG. 5 is drawn) along the axis of the inner cylindrical portion 3 of the stator core 20 are aligned with a direction perpendicular to these axes. In the same way, a second end (e.g., the lower end on the paper on which FIG. 5 is drawn) along the axis of the rotor core 6 and a second end (e.g., the lower end on the paper on which FIG. 5 is drawn) along the axis of the inner cylindrical portion 3 of the stator core 20 are aligned with a direction perpendicular to these axes. The rotor core 6 is as thick as the stator core 20. In this case, the first end of the rotor core 6 and the first end of the stator core 20 do not have to be exactly aligned with each other but may be misaligned with each other within a tolerance range. Likewise, the second end of the rotor core 6 and the second end of the stator core 20 do not have to be exactly aligned with each other but may be misaligned with each other within a tolerance range. The tolerance range may be defined by an error of within 3%, within 5%, or within 10%, for example, of the thickness of the rotor core 6.

Inside the rotor core 6, the output shaft 51 is held. As shown in FIG. 3, the rotor core 6 includes: a shaft holder 61 having a shaft hole 611, through which the output shaft 51 is passed; and a rotor body 62 surrounding the shaft holder 61. The shaft holder 61 has a circular cylindrical shape. The space inside the shaft holder 61 is the shaft hole 611. The rotor body 62 has the shape of a circular cylinder, which is concentric with the shaft holder 61. The rotor core 6 includes, between the shaft holder 61 and the rotor body 62, a plurality of (e.g., twelve in the example illustrated in FIG. 3) penetrating portions 63 and a plurality of (e.g., six in the example illustrated in FIG. 3) bridge portions 64 that couple the shaft holder 61 to the rotor body 62.

The rotor body 62 includes a plurality of (e.g., six in the example illustrated in FIG. 3) magnet housings 621. The plurality of magnet housings 621 house the plurality of permanent magnets 7 such that the plurality of permanent magnets 7 are arranged as spokes (i.e., radially) around the center C1 of the rotor core 6. Each of the plurality of magnet housings 621 is a through hole that penetrates through the rotor body 62 along its axis. Each of the permanent magnets 7 is held in an associated one of the magnet housings 621 by being inserted into the associated magnet housing 621 with an adhesive applied. Alternatively, each of the plurality of permanent magnets 7 may also be held in its associated magnet housing 621 with magnetic suction force between the rotor core 6 and the permanent magnet 7, instead of using the adhesive.

The plurality of magnet housings 621 are provided at regular intervals along the circumference of the rotor core 6. This allows the plurality of permanent magnets 7 to be arranged at regular intervals along the circumference of the rotor core 6. In addition, the longitudinal axis of each of the plurality of permanent magnets 7 is aligned with the radius of the rotor core 6.

Each permanent magnet 7 may be a neodymium magnet, for example. The two magnetic poles of each permanent magnet 7 are arranged along the circumference of the rotor core 6. Two permanent magnets 7, which are adjacent to each other along the circumference of the rotor core 6, are arranged with their magnetic poles with the same polarity facing each other. Part of the magnetic flux generated between two permanent magnets 7 which are adjacent to each other along the circumference of the rotor core 6 is directed from a region 622, located between the two permanent magnets 7, of the rotor body 62 toward the stator 2 (see FIG. 1) (as indicated by the arrow A1). That is to say, a magnetic flux aligned with the radius of the rotor core 6 is produced between the region 622 and the stator 2.

The rotor core 6 has a high magnetic resistance portion R2. The high magnetic resistance portion R2 has higher magnetic resistance than parts, surrounding the high magnetic resistance portion R2, of the rotor core 6. The high magnetic resistance portion R2 is provided on the magnetic path of the magnetic flux generated by the plurality of permanent magnets 7. The magnetic path of the magnetic flux generated by the plurality of permanent magnets 7 includes: a region facing any of the two magnetic poles of a particular one of the permanent magnets 7; and a region located adjacent to the particular permanent magnet 7 and on a curve connecting the two magnetic poles of the particular permanent magnet 7. Providing the high magnetic resistance portion R2 may reduce the magnetic flux generated by, and leaking from, the permanent magnets 7. In other words, the magnetic flux directed from the region 622 located between two permanent magnets 7 adjacent to each other along the circumference of the rotor core 6 toward the stator 2 (see FIG. 1) may be increased. This allows the motor 1 to have an increased torque.

The high magnetic resistance portion R2 may include, for example, the plurality of penetrating portions 63 described above. Each of the plurality of penetrating portions 63 penetrates through the rotor core 6 along its axis. In addition, the high magnetic resistance portion R2 further includes a plurality of (e.g., twelve in the example illustrated in FIG. 3) penetrating portions 65, which are provided separately from the plurality of penetrating portions 63. Each of the penetrating portions 65 penetrates through the rotor core 6 along its axis. Each of the plurality of penetrating portions 63 and each of the plurality of penetrating portions 65 communicate with the magnet housings 621.

In this embodiment, the rotor core 6 includes first parts 601 and second parts 602. A plurality of (e.g., six) first parts 601 and a plurality of (e.g., six) second parts 602 are provided one to one for the plurality of permanent magnets 7. The following description will be focused on one permanent magnet 7 and the first part 601 and second part 602 provided for the permanent magnet 7.

The first part 601 and the second part 602 are adjacent to the permanent magnet 7 along the radius of the rotor core 6. The first part 601 includes a part of the shaft holder 61. The first part 601 is one end portion, located closer to the center C1 of the rotor core 6, out of two end portions (along the radius of the rotor core 6) of the permanent magnet 7. More specifically, the first part 601 is a part located between the permanent magnet 7 and the shaft hole 611.

The first part 601 is provided with at least respective parts of the two penetrating portions 63. The two penetrating portions 63 are arranged side by side along the circumference of the rotor core 6. Each of the two penetrating portions 63 includes a part extending along the circumference of the rotor core 6 and a part extending along the radius of the rotor core 6. In addition, a projection 66 protruding from the shaft holder 61 is further provided between the two penetrating portions 63. That is to say, the rotor core 6 includes the projection 66. The projection 66 is in contact with the permanent magnet 7 along the radius of the rotor core 6.

The second part 602 includes a part of the rotor body 62. The second part 602 is one end portion, located closer to the outer periphery of the rotor core 6, out of the two end portions (along the radius of the rotor core 6) of the permanent magnet 7. More specifically, the second part 602 is a part located between the permanent magnet 7 and the outer edge of the rotor core 6.

The second part 602 is provided with two penetrating portions 65. The two penetrating portions 65 are arranged side by side along the circumference of the rotor core 6. The longitudinal axis of each of the two penetrating portions 65 extends along the circumference of the rotor core 6. In addition, a projection 67 in contact with the permanent magnet 7 along the radius of the rotor core 6 is further provided between the two penetrating portions 63. That is to say, the rotor core 6 includes the projection 67. Interposing the permanent magnet 7 between the projections 66, 67 regulates the movement of the permanent magnet 7 along the radius of the rotor core 6.

That is to say, at least parts (namely, the penetrating portions 63, 65) of the high magnetic resistance portion R2 are provided for at least one of the first part 601 or the second part 602.

The length L3 in the first part 601 of the high magnetic resistance portion R2 (i.e., the length measured along the radius of the rotor core 6) is different from the length L4 in the second part 602 of the high magnetic resistance portion R2 (i.e., the length measured along the radius of the rotor core 6). Specifically, the length L3 is greater than the length L4. The length L3 in the first part 601 is the length, measured along the radius of the rotor core 6, of the penetrating portions 63. The length L4 in the second part 602 is the length, measured along the radius of the rotor core 6, of the penetrating portions 65.

A bridge portion 64 is provided between a penetrating portion 63 provided adjacent to an arbitrary one of the plurality of permanent magnets 7 and another penetrating portion 63 provided adjacent to another permanent magnet 7 that is adjacent to the arbitrary permanent magnet 7. Thus, a plurality of (e.g., six) bridge portions 64 are provided at regular intervals along the circumference of the rotor core 6. In addition, a penetrating portion 68 is also provided for a region, facing the bridge portion 64 along the radius of the rotor core 6, of the rotor body 62. The penetrating portion 68 is included in the high magnetic resistance portion R2. The penetrating portion 68 penetrates through the rotor core 6 along its axis. When viewed along the axis of the rotor core 6, the penetrating portion 63 has a circular shape. A plurality of (e.g., six in the example illustrated in FIG. 3) penetrating portions 68 are provided one to one for the plurality of bridge portions 64.

The rotor core 6 has a plurality of (e.g., six in the example illustrated in FIG. 3) voids 69 (through holes). Each of the plurality of voids 69 penetrates through the rotor core 6 along its axis. The plurality of voids 69 are provided for, for example, a region different from the magnetic path of the magnetic flux generated by the plurality of permanent magnets 7. The plurality of voids 69 are provided along the inner edge of the shaft holder 61. The plurality of voids 69 are provided at regular intervals along the circumference of the rotor core 6. The plurality of voids 69 communicate with the shaft hole 611. Providing the plurality of voids 69 allows the weight of the rotor core 6 to be reduced.

Optionally, the respective voids 69 may be included in the high magnetic resistance portion R2. That is to say, the respective voids 69 may be provided for the magnetic path of the magnetic flux generated by the plurality of permanent magnets 7.

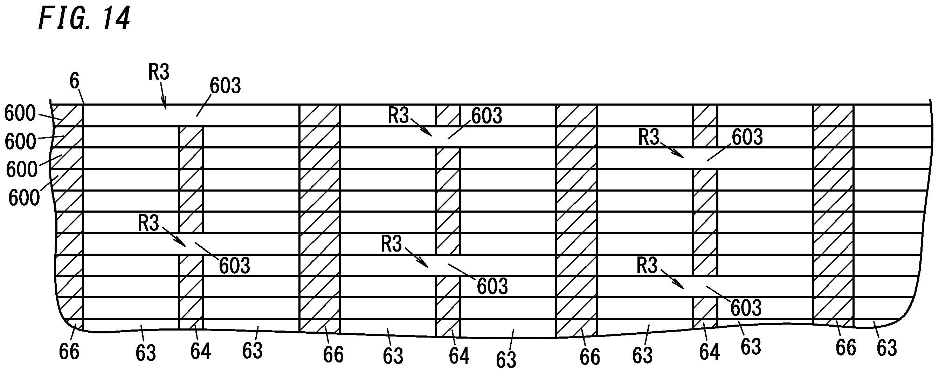

FIG. 14 illustrates a part, extended as a plan view, of a cross section indicated by the curve X1 in FIG. 3. The high magnetic resistance portion R3 is provided for each of a plurality of steel plates 600 of the rotor core 6. In other words, the rotor core 6 includes a plurality of high magnetic resistance portions R3.

Each high magnetic resistance portion R3 has a plurality of cavities 603. Each of the plurality of cavities 603 penetrates through an associated steel plate 600 along its axis. The plurality of cavities 603 are provided for regions, corresponding to the bridge portions 64, of the steel plates 600. That is to say, each of the plurality of cavities 603 is provided to cut off a region corresponding to the bridge portion 64 into two parts. In this embodiment, one cavity 603 is provided for each steel plate 600. Note that illustration of the plurality of cavities 603 is omitted from all drawings but FIG. 14.

The plurality of steel plates 600 are stacked one on top of another such that the respective high magnetic resistance portions R3 (cavities 603) of adjacent steel plates 600 do not overlap with each other along the thickness of the steel plates 600. In this case, the six bridge portions 64 will be hereinafter referred to as a "first bridge portion," a "second bridge portion," .., and a "sixth bridge portion," respectively, in the order in which the bridge portions 64 are arranged side by side in the circumferential direction. In addition, the plurality of steel plates 600 will be hereinafter referred to as a "first steel plate," a "second steel plate," ..., and so on, respectively, in the order in which the steel plates 600 are arranged one on top of another along the thickness of the steel plates 600. For example, in the first, seventh, thirteenth, and other steel plates, the cavity 603 is provided for a region corresponding to the first bridge portion. In the second, eighth, fourteenth, and other steel plates, the cavity 603 is provided for a region corresponding to the second bridge portion. In the third, ninth, fifteenth, and other steel plates, the cavity 603 is provided for a region corresponding to the third bridge portion. In the rotor core 6, parts, other than the cavities 603, of one or more (e.g., five in the example illustrated in FIG. 14) steel plates 600 are arranged in a portion thereof located between one cavity 603 and another cavity 603 provided to overlap with the former cavity 603 along the thickness of the steel plates 600.

The cavities 603 may be provided through the respective steel plates 600, for example, before the plurality of steel plates 600 are stacked one on top of another. The plurality of steel plates 600 are formed to have the same shape when viewed in the thickness direction and are stacked one on top of another such that two adjacent ones of the steel plates 600 have mutually different orientations (angles). More specifically, the second steel plate is stacked on the first steel plate to have an orientation that forms an angle of rotation of 60 degrees with respect to the first steel plate. The third steel plate is stacked on the second steel plate to have an orientation that forms an angle of rotation of 60 degrees with respect to the second steel plate. Likewise, each of the fourth steel plate and the other steel plates is stacked to have an orientation that forms an angle of rotation of 60 degrees (which is a predetermined angle) with respect to its adjacent steel plate. Optionally, a plurality of cavities 603 may be provided for each steel plate 600. For example, the plurality of cavities 603 may be provided at regular intervals along the circumference of the steel plate 600. Optionally, some of the plurality of steel plates 600 may have a different thickness from others of the plurality of steel plates 600.

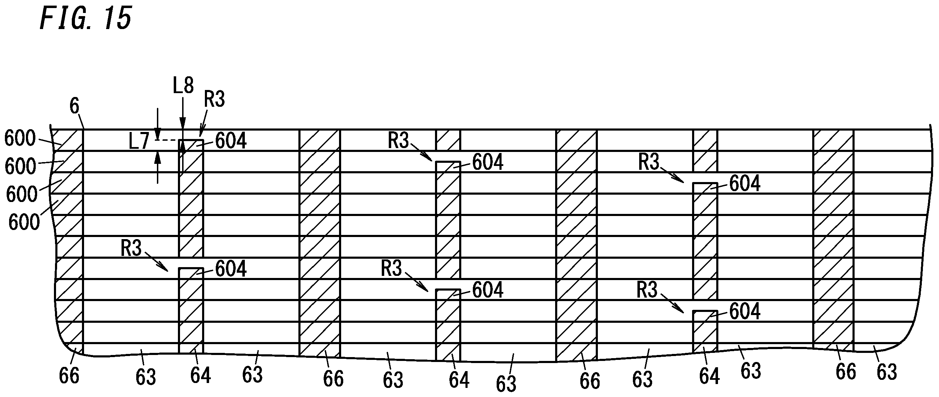

In still another example, the high magnetic resistance portion R3 of each steel plate 600 may have a thinned portion 604 instead of the cavity 603 as shown in FIG. 15. Each of the thinned portions 604 has a shorter dimension as measured along the axis of the rotor core 6 than parts, surrounding the thinned portion 604, of the rotor core 6 (such as a part corresponding to the shaft holder 61). That is to say, the thickness L7 of each thinned portion 604 of a steel plate 600 is smaller than the thickness L8 of parts, surrounding the thinned portion 604, of the steel plate 600. The thinned portion 604 is formed by subjecting a part of each steel plate 600 to pressing. This allows the steel plate 600 to have higher mechanical strength, compared to a situation where the thinned portion 604 is formed by removing a part of the steel plate 600.

Note that the cavities 603 and thinned portions 604 do not have to be provided for regions, corresponding to the bridge portions 64, of the rotor core 6. Alternatively, the cavities 603 and the thinned portions 604 may be provided for a region, corresponding to the first part 601, of the rotor core 6 and/or a region, corresponding to the second part 602, of the rotor core 6.

### (2-6) Base and bearing

As shown in FIGS. 1 and 5, the motor 1 further includes a base 9 and two bearings 52. A bottomed cylindrical cover is attached to the base 9. The stator 2 and the rotor 5 are housed in the space surrounded with the base 9 and the cover. One of the two bearings 52 is fixed to the cover and the other bearing 52 is fixed to the base 9. The two bearings 52 hold the output shaft 51 of the rotor 5 rotatably.

### (2-7) Advantages

In a manufacturing process of the motor 1, with the central core 21 and outer cylindrical portion 22 of the stator 2 separated from each other, the coils 23 are wound around the body portions 41 of the plurality of teeth 4 of the central core 21 via the coil bobbin 8. Thereafter, the outer cylindrical portion 22 is mounted onto the plurality of teeth 4.

The coils 23 are wound around the teeth 4 using a tool arranged beside the tip part of the respective teeth 4, for example. The plurality of teeth 4 protrude radially outward from the inner cylindrical portion 3. This allows the space left at the tip of each tooth 4 to be broadened, compared to a situation where the plurality of teeth 4 protrude inward. This facilitates winding the coils 23 around the respective teeth 4, and in some cases, allows the space factor of the coils 23 to be increased.

In addition, each tooth 4 includes two tip pieces 42 that reduce the chances of the coil 23 coming off the body portion 41, thus allowing the coil 23 to be wound more easily around each tooth 4. Furthermore, the stress applied to each tooth 4 may be distributed in the two tip pieces 42, thus reducing the chances of the tooth 4 being deformed. Furthermore, each tip piece 42 includes the curvilinear surface 421, which is in contact with the outer cylindrical portion 22. This allows, when the outer cylindrical portion 22 is mounted onto the plurality of teeth 4, the stress applied from the outer cylindrical portion 22 to the respective teeth 4 to be distributed more easily along the curvilinear surface 421, compared to a situation where the surface of the tip pieces 42 is formed as a flat surface.

Furthermore, each tip piece 42 has the curved portion 422 in a part connected to its associated body portion 41. Thus, part of the magnetic flux passing through each tooth 4 passes through the body portion 41 and the curved portion 422 and then passes through the curved portion 422 and body portion 41 of an adjacent tooth 4 (as indicated by the arrow A2 shown in FIG. 7). As can be seen, part of the magnetic flux is extracted out of the tooth 4 by passing through such a magnetic path that is curved along the curved portion 422 with respect to the radius of the inner cylindrical portion 3. This shortens the magnetic path compared to a situation where the magnetic flux is extracted out of the tooth 4 by passing through a magnetic path aligned with the radius of the inner cylindrical portion 3. That is to say, such a magnetic path comes to have reduced magnetic resistance.

Furthermore, the plurality of teeth 4 are connected together at one end thereof via the inner cylindrical portion 3 and are in contact with the outer cylindrical portion 22 at the other end thereof. In other words, the inner cylindrical portion 3 is provided at one end of the plurality of teeth 4 and the outer cylindrical portion 22 is provided at the other end of the plurality of teeth 4. This contributes to increasing the mechanical strength of the stator core 20, compared to a situation where only either the inner cylindrical portion 3 or the outer cylindrical portion 22 is provided. In addition, this may increase the robustness of the dimensional tolerance of the stator core 20 and contributes to reducing cogging of the motor 1.

Furthermore, the plurality of permanent magnets 7 are arranged as spokes around the center C1 of the rotor core 6, thus facilitating shortening the diameter of the rotor 5.

### (Variations of exemplary embodiment)

Next, variations of the exemplary embodiment described above will be enumerated one after another. Note that the variations to be described below may be adopted in combination as appropriate.

The configuration of the rotor 5 may be changed arbitrarily. For example, the plurality of permanent magnets 7 do not have to be arranged as spokes but may also be arranged to form a polygonal pattern. Also, the rotor core 6 does not have to include the high magnetic resistance portions R2, R3.

When viewed along its axis, the rotor core 6 does not have to have a perfectly circular shape. Alternatively, the rotor core 6 may also have a generally circular or elliptical shape with some projections or recesses provided along its circumference.

Into each of the penetrating portions 302 of the stator core 20 and the penetrating portions 63, 65, 68 of the rotor core 6, a spacer made of a non-magnetic material may be inserted. That is to say, the high magnetic resistance portion R2 may include not only the penetrating portions 63, 65, 68 but also spacers.

The number of the permanent magnets 7 provided does not have to be six but may also be two or more.

The motor 1 does not have to be provided for the electric tool 10. Alternatively, the motor 1 may also be provided for an electric bicycle or an electric assist bicycle, for example.

Optionally, the motor 1 may further include a weight adjuster attached to the rotor 5. The weight adjuster may be configured as, for example, a cylindrical weight and may be attached to the output shaft 51 of the rotor 5. The weight balance of the rotor 5 may be adjusted by partially cutting off the weight adjuster and thereby changing the weight and center of gravity of the weight adjuster. This allows compensating for a shift caused, by providing the penetrating portions 63, 65, 68 and the cavities 603 for the rotor core 6, in the weight balance of the rotor 5. Still alternatively, the weight balance of the rotor 5 may also be adjusted by partially cutting off the rotor core 6 itself. Yet alternatively, the weight balance of the rotor 5 may also be adjusted by adjusting the positions and amount of the adhesive applied to the rotor 5.

Optionally, in the plurality of steel plates 210 (or 600), the arrangement of the cavities 303 (or 603) may be changed. To ensure sufficient mechanical strength for the plurality of steel plates 210 (or 600), it is recommended that two or more cavities 303 (or 603) not be adjacent to each other along the thickness of the plurality of steel plates 210 (or 600).

Optionally, the cavities 303 (or 603) may also be provided periodically along the thickness of the plurality of steel plates 210 (or 600). For example, between an arbitrary cavity 303 (or 603) and another cavity 303 (or 603) overlapping with the former cavity 303 (or 603) along the thickness of the plurality of steel plates 210 (or 600), a certain number of steel plates 210 (or 600) may be arranged. Alternatively, the distance between an arbitrary cavity 303 (or 603) and another cavity 303 (or 603) overlapping with the former cavity 303 (or 603) along the thickness of the plurality of steel plates 210 (or 600) may also be a constant distance.

Furthermore, the arrangement of the thinned portions 304 (or 604) in the plurality of steel plates 210 (or 600) may also be changed in the same way as the arrangement of the cavities 303 (or 603). Optionally, the plurality of steel plates 210 (or 600) may be provided with both the cavities 303 (or 603) and the thinned portions 304 (or 604).

Alternatively, the cavities 303 and/or the thinned portions 304 may be provided for only some of the plurality of steel plates 210. Likewise, the cavities 303 and/or the thinned portions 304 may be provided for only some of the plurality of steel plates 600.

Furthermore, each of the plurality of steel plates 210 and the plurality of steel plates 600 is suitably a single member, of which the respective parts are connected together. This may reduce the number of parts of the motor 1, compared to a situation where each steel plate 210 (or 600) is made up of a plurality of members.

Optionally, the voids 69 may also be provided for parts other than the shaft holder 61. Alternatively, each void 69 may also be a recess depressed along the axis of the rotor core 6.

Optionally, each of the plurality of fitting portions 221 of the outer cylindrical portion 22 may also be a projection. In that case, each of the plurality of teeth 4 may have a recess to which an associated fitting portion 221 is fitted.

### (Recapitulation)

The embodiment and its variations described above may be specific implementations of the following aspects of the present disclosure.

An electric tool 10 according to a first aspect includes a motor 1. The motor 1 includes a stator core 20 and a rotor 5. The rotor 5 has an output shaft 51 and rotates with respect to the stator core 20. The stator core 20 includes: an inner cylindrical portion 3 having a circular cylindrical shape; and a plurality of teeth 4. Inside the inner cylindrical portion 3, the rotor 5 is arranged. Each of the plurality of teeth 4 includes a body portion 41 and a tip piece 42. The body portion 41 protrudes outward from the inner cylindrical portion 3 along a radius of the inner cylindrical portion 3. The tip piece 42 extends, from a tip part of the body portion 41, in a direction intersecting with a direction in which the body portion 41 protrudes.

According to this configuration, a tip part of the body portion 41 is provided with a tip piece 42, thus reducing, compared to a situation where no tip piece 42 is provided, the chances of a coil 23 wound around the body portion 41 moving toward the tip part of the body portion 41 to come off the body portion 41.

In an electric tool 10 according to a second aspect, which may be implemented in conjunction with the first aspect, the stator core 20 further includes an outer cylindrical portion 22 having a circular cylindrical shape. The outer cylindrical portion 22 is mounted on the plurality of teeth 4 to surround the plurality of teeth 4.

This configuration allows the outer cylindrical portion 22 to be used as a part of a magnetic path through which a magnetic flux passes.

In an electric tool 10 according to a third aspect, which may be implemented in conjunction with the second aspect, the outer cylindrical portion 22 includes a plurality of fitting portions 221. The plurality of fitting portions 221 correspond one to one to the plurality of teeth 4. Each of the plurality of fitting portions 221 and one tooth 4, corresponding to the fitting portion 221, out of the plurality of teeth 4 are fitted into each other when at least one of the fitting portion 221 or the tooth 4 is caused to move along the radius.

This configuration more easily reduces, compared to a situation where the plurality of fitting portions 221 and the plurality of teeth 4 are fitted to each other by moving along the axis of the inner cylindrical portion 3, misalignment between the outer cylindrical portion 22 and the plurality of teeth 4 along the axis.

An electric tool 10 according to a fourth aspect, which may be implemented in conjunction with any one of the first to third aspects, further includes a coil bobbin 8. The coil bobbin 8 has electrical insulation properties. The coil bobbin 8 at least partially covers at least one of the plurality of teeth 4.

This configuration allows electrical insulation between the plurality of teeth 4 and the coils 23 to be increased by winding the coils 23 around the coil bobbin 8.

In an electric tool 10 according to a fifth aspect, which may be implemented in conjunction with the fourth aspect, the coil bobbin 8 includes two members 81. The two members 81 are arranged along an axis of the inner cylindrical portion 3. The two members 81 are formed separately from each other.

This configuration allows the coil bobbin 8 to be mounted onto the plurality of teeth 4 more easily than in a situation where the coil bobbin 8 is a single member.

In an electric tool 10 according to a sixth aspect, which may be implemented in conjunction with the fifth aspect, the two members 81 are out of contact with each other along the axis of the inner cylindrical portion 3.

This configuration allows the coil bobbin 8 to be attached to respective stator cores 20, of which the plurality of teeth 4 have mutually different dimensions as measured along the axis of the stator cores 20, to have the same configuration in common. That is to say, the same coil bobbin 8 may be attached to any of those stator cores 20 by varying the distance between the two members 81 of the coil bobbin 8 from one stator core 20 to another.

In an electric tool 10 according to a seventh aspect, which may be implemented in conjunction with any one of the first to sixth aspects, the tip piece 42 of each of the plurality of teeth 4 includes two tip pieces 42. The two tip pieces 42 are provided, in the tip part of the body portion 41, on both sides along a circumference of the inner cylindrical portion 3.

This configuration further reduces, compared to a situation where a single tip piece 42 is provided, the chances of the coil 23 wound around the body portion 41 moving toward the tip part of the body portion 41 to come off the body portion 41.

In an electric tool 10 according to an eighth aspect, which may be implemented in conjunction with any one of the first to seventh aspects, a surface, located at an outer end along the radius of the inner cylindrical portion 3, of the tip piece 42 includes a curvilinear surface 421.

This configuration allows, compared to a situation where the surface, located at an outer end along the radius of the inner cylindrical portion 3, of the tip piece 42 is a flat surface, the pressure applied to that surface to be distributed more easily.

In an electric tool 10 according to a ninth aspect, which may be implemented in conjunction with any one of the first to eighth aspects, the tip piece 42 includes, in its part connected to the body portion 41, a curved portion 422. The curved portion 422 is curved such that as a distance to an outer edge of the tip piece 42 decreases along the radius of the inner cylindrical portion 3, a distance from the body portion 41 increases along a circumference of the inner cylindrical portion 3.

According to this configuration, a magnetic path passing through the respective body portions 41 and curved portions 422 of two adjacent teeth 4 is formed as a part of a magnetic path connecting the two adjacent teeth 4 (as indicated by the arrow A2 in FIG. 7). This shortens the magnetic path connecting the two adjacent teeth 4 (i.e., reduces the magnetic resistance of this magnetic path).

In an electric tool 10 according to a tenth aspect, which may be implemented in conjunction with any one of the first to ninth aspects, the inner cylindrical portion 3 includes a high magnetic resistance portion R1. The high magnetic resistance portion R1 has higher magnetic resistance than parts, surrounding the high magnetic resistance portion R1, of the inner cylindrical portion 3.

This configuration may reduce the magnetic flux leaking from the inner cylindrical portion 3.

In an electric tool 10 according to an eleventh aspect, which may be implemented in conjunction with the tenth aspect, the high magnetic resistance portion R1 includes a penetrating portion 302. The penetrating portion 302 penetrates through the inner cylindrical portion 3 along an axis thereof to divide the inner cylindrical portion 3 into multiple pieces along a circumference thereof.

This configuration may reduce the magnetic flux leaking from the inner cylindrical portion 3.

In an electric tool 10 according to a twelfth aspect, which may be implemented in conjunction with the eleventh aspect, the penetrating portion 302 of the high magnetic resistance portion R1 includes a plurality of penetrating portions 302. The plurality of penetrating portions 302 separate the plurality of teeth 4 from each other.

This configuration further reduces the magnetic flux leaking from the inner cylindrical portion 3 compared to a situation where some of the plurality of teeth 4 is connected to another tooth 4.

In an electric tool 10 according to a thirteenth aspect, which may be implemented in conjunction with the tenth aspect, the inner cylindrical portion 3 is continuous along a circumference thereof.

This configuration allows the motor 1 to be assembled more easily than in a situation where the inner cylindrical portion 3 is divided into multiple pieces along the circumference thereof.

In an electric tool 10 according to a fourteenth aspect, which may be implemented in conjunction with any one of the tenth to thirteenth aspects, the high magnetic resistance portion R1 includes a thinned portion 304. The thinned portion 304 has a shorter dimension as measured along the axis of the inner cylindrical portion 3 than parts, surrounding the thinned portion 304, of the inner cylindrical portion 3.

This configuration may reduce the magnetic flux leaking from the inner cylindrical portion 3.

In an electric tool 10 according to a fifteenth aspect, which may be implemented in conjunction with any one of the tenth to fourteenth aspects, the stator core 20 is formed by stacking a plurality of steel plates 210 one on top of another in a thickness direction. The high magnetic resistance portion R1 is provided for each of two or more steel plates 210 selected from the plurality of steel plates 210. The two or more steel plates 210 are stacked one on top of another such that the respective high magnetic resistance portions R1 of mutually adjacent steel plates 210 do not overlap with each other in the thickness direction.

This configuration may increase the mechanical strength of the stator core 20 compared to a situation where the respective high magnetic resistance portions R1 of adjacent steel plates 210 overlap with each other in the thickness direction.

Note that the constituent elements according to all aspects but the first aspect are not essential constituent elements for the electric tool 10 but may be omitted as appropriate.

A motor 1 according to a sixteenth aspect includes a stator core 20 and a rotor 5. The rotor 5 has an output shaft 51 and rotates with respect to the stator core 20. The stator core 20 includes: an inner cylindrical portion 3 having a circular cylindrical shape; and a plurality of teeth 4. Inside the inner cylindrical portion 3, the rotor 5 is arranged. Each of the plurality of teeth 4 includes a body portion 41 and a tip piece 42. The body portion 41 protrudes outward from the inner cylindrical portion 3 along a radius of the inner cylindrical portion 3. The tip piece 42 extends, from a tip part of the body portion 41, in a direction intersecting with a direction in which the body portion 41 protrudes.

According to this configuration, a tip part of the body portion 41 is provided with a tip piece 42, thus reducing, compared to a situation where no tip piece 42 is provided, the chances of a coil 23 wound around the body portion 41 moving toward the tip part of the body portion 41 to come off the body portion 41.

Optionally, a configuration according to the following seventeenth aspect may be implemented without being based on the configuration according to the first aspect as an essential one. Specifically, an electric tool 10 according to the seventeenth aspect includes a motor 1. The motor 1 includes a stator core 20 and a rotor 5. The rotor 5 has an output shaft 51 and rotates with respect to the stator core 20. The stator core 20 includes: an inner cylindrical portion 3 having a circular cylindrical shape; a plurality of teeth 4; and an outer cylindrical portion 22 having a circular cylindrical shape. Inside the inner cylindrical portion 3, the rotor 5 is arranged. Each of the plurality of teeth 4 includes a body portion 41. The body portion 41 protrudes outward from the inner cylindrical portion 3 along a radius of the inner cylindrical portion 3. The outer cylindrical portion 22 are mounted on the plurality of teeth 4 to surround the plurality of teeth 4. The outer cylindrical portion 22 includes a plurality of fitting portions 221. The plurality of fitting portions 221 correspond one to one to the plurality of teeth 4. Each of the plurality of fitting portions 221 and one tooth 4, corresponding to the fitting portion 221, out of the plurality of teeth 4 are fitted into each other by causing at least one of the fitting portion 221 or the tooth 4 to move along the radius of the inner cylindrical portion 3.

This configuration more easily reduces, compared to a situation where the plurality of fitting portions 221 and the plurality of teeth 4 are fitted into each other by moving along the axis of the inner cylindrical portion 3, misalignment between the outer cylindrical portion 22 and the plurality of teeth 4 along the axis.

### Reference Signs List

- 1: Motor
- 10: Electric Tool
- 20: Stator Core
- 210: Steel Plate
- 22: Outer Cylindrical Portion
- 221: Fitting Portion
- 3: Inner Cylindrical Portion
- 302: Penetrating Portion
- 304: Thinned Portion
- 4: Teeth
- 41: Body Portion
- 42: Tip Piece
- 421: Curvilinear Surface
- 422: Curved Portion
- 5: Rotor
- 51: Output Shaft
- 8: Coil Bobbin
- 81: Member
- R1: High Magnetic Resistance Portion

## Claims

1. An electric tool comprising
a motor including: a stator core; and a rotor having an output shaft and configured to rotate with respect to the stator core,
the stator core including:
an inner cylindrical portion which has a circular cylindrical shape and in which the rotor is arranged; and
a plurality of teeth, each of the plurality of teeth including: a body portion protruding outward from the inner cylindrical portion along a radius of the inner cylindrical portion; and a tip piece extending, from a tip part of the body portion, in a direction intersecting with a direction in which the body portion protrudes.

2. The electric tool of claim 1, wherein
the stator core further includes an outer cylindrical portion having a circular cylindrical shape and mounted on the plurality of teeth to surround the plurality of teeth.

3. The electric tool of claim 2, wherein
the outer cylindrical portion includes a plurality of fitting portions that correspond one to one to the plurality of teeth, and
each of the plurality of fitting portions and one tooth, corresponding to the fitting portion, out of the plurality of teeth are fitted into each other when at least one of the fitting portion or the tooth is caused to move along the radius.

4. The electric tool of any one of claims 1 to 3, further comprising a coil bobbin having electrical insulation properties and at least partially covering at least one of the plurality of teeth.

5. The electric tool of claim 4, wherein
the coil bobbin includes two members arranged along an axis of the inner cylindrical portion, and
the two members are formed separately from each other.

6. The electric tool of claim 5, wherein
the two members are out of contact with each other along the axis.

7. The electric tool of any one of claims 1 to 6, wherein
the tip piece of each of the plurality of teeth includes two tip pieces, and
the two tip pieces are provided, in the tip part of the body portion, on both sides along a circumference of the inner cylindrical portion.

8. The electric tool of any one of claims 1 to 7, wherein
a surface, located at an outer end along the radius, of the tip piece includes a curvilinear surface.

9. The electric tool of any one of claims 1 to 8, wherein
the tip piece includes, in its part connected to the body portion, a curved portion,
the curved portion being curved such that as a distance to an outer edge of the tip piece decreases along the radius, a distance from the body portion increases along a circumference of the inner cylindrical portion.

10. The electric tool of any one of claims 1 to 9, wherein
the inner cylindrical portion includes a high magnetic resistance portion,
the high magnetic resistance portion having higher magnetic resistance than parts, surrounding the high magnetic resistance portion, of the inner cylindrical portion.

11. The electric tool of claim 10, wherein
the high magnetic resistance portion includes a penetrating portion penetrating through the inner cylindrical portion along an axis thereof to divide the inner cylindrical portion into multiple pieces along a circumference thereof.

12. The electric tool of claim 11, wherein
the penetrating portion of the high magnetic resistance portion includes a plurality of penetrating portions, and
the plurality of penetrating portions separate the plurality of teeth from each other.

13. The electric tool of claim 10, wherein
the inner cylindrical portion is continuous along a circumference thereof.

14. The electric tool of any one of claims 10 to 13, wherein
the high magnetic resistance portion includes a thinned portion, and
the thinned portion has a shorter dimension as measured along an axis of the inner cylindrical portion than parts, surrounding the thinned portion, of the inner cylindrical portion.

15. The electric tool of any one of claims 10 to 14, wherein
the stator core is formed by stacking a plurality of steel plates one on top of another in a thickness direction,
the high magnetic resistance portion is provided for each of two or more steel plates selected from the plurality of steel plates, and
the two or more steel plates are stacked one on top of another such that the respective high magnetic resistance portions of mutually adjacent steel plates do not overlap with each other in the thickness direction.

16. A motor comprising:
a stator core; and
a rotor having an output shaft and configured to rotate with respect to the stator core,
the stator core including:
an inner cylindrical portion which has a circular cylindrical shape and in which the rotor is arranged; and
a plurality of teeth, each of the plurality of teeth including: a body portion protruding outward from the inner cylindrical portion along a radius of the inner cylindrical portion; and a tip piece extending, from a tip part of the body portion, in a direction intersecting with a direction in which the body portion protrudes.
